# EUROPÄISCHE PATENTANMELDUNG

(11) **EP 4 089 909 A1**
(43) Veröffentlichungstag der Anmeldung: **16.11.2022**
(21) Anmeldenummer: 22171747.3
(22) Anmeldetag: 05.05.2022
(51) Int. Cl.: H02P 7/00, H02P 8/42, H02P 7/28, H02P 7/285

(54) **VERSTELLEINRICHTUNG, MOTORISCH ANGETRIEBENES VENTIL UND VERFAHREN ZUM BETREIBEN EINER VERSTELLEINRICHTUNG**

(30) Priorität: 12.05.2021 CH 5382021
(71) Anmelder: Oblamatik AG, 7000 Chur (CH)
(72) Erfinder: KNUPFER, Thomas, 7302 Landquart (CH); OBRIST, Roland, 7412 Scharans (CH)
(74) Vertreter: Troesch Scheidegger Werner AG

(57) **Zusammenfassung**

Die Erfindung betrifft eine Verstelleinrichtung (10), welche einen Gleichstrommotor (12) und ein durch eine Ausgangswelle des Gleichstrommotors (12) angetriebenes Verstellorgan umfasst. Die Verstelleinrichtung (10) umfasst ferner einen mit dem Gleichstrommotor (10) gekoppelten Leistungstreiber (20) zur Steuerung eines Motorstroms des Gleichstrommotors (10), eine Strommessschaltung (14), welche ausgebildet ist, eine Stromaufnahme des Gleichstrommotors (12) zu erfassen und ein von der Anzahl von Umdrehungen des Gleichstrommotors (12) abhängiges Strommesssignal auszugeben, und eine Recheneinheit (18), welcher das Strommesssignal eingegeben wird, ausgebildet zum Bestimmen der Anzahl von Umdrehungen des Gleichstrommotors (12) basierend auf dem Strommesssignal.

## Beschreibung

Die vorliegende Erfindung betrifft eine Verstelleinrichtung, ein motorisch angetriebenes Ventil sowie ein Verfahren zum Betreiben einer Verstelleinrichtung.

Unter einer Verstelleinrichtung kann z.B. in der Sanitärtechnik eine Einheit verstanden werden, welche auch als Operationsteil einer Sanitärarmatur umschrieben werden kann. Dabei können solche Verstelleinrichtungen Ventile umfassen. Verstelleinrichtungen können von Hand mit einem Hebel (Einhebelmischer) oder über ein elektronisches Bedienelement durch ein Ventil mit einem motorisch angetriebenen Verstellorgan betätigt werden. Hierbei kann das Verstellorgan durch eine Ausgangswelle eines Elektromotors angetrieben werden. Es sind Verstelleinrichtungen bekannt, welche für den Batteriebetrieb ausgelegt sind. Hierdurch kann das Verlegen elektrischer Leitungen vermieden werden, was insb. in Sanitärräumen Probleme mit sich bringen kann.

Es ist im Stand der Technik bekannt, bei Verstelleinrichtungen auf Schrittmotoren zurückzugreifen. Dies bringt den Vorteil mit sich, dass der Winkelgrad genau bestimmt werden kann. Sobald kalibriert, kann das Verstellorgan exakt verstellt werden, z.B. von einer Schliessposition zu einer gewünschten Offenposition und von dort aus exakt wieder zurück zur Schliessposition. Weitere Bauteile, z.B. Positionsgeber, können somit eingespart werden. Ein Nachteil in der Verwendung von Schrittmotoren ist im hohen Stromverbrauch zu finden. Somit müssen bei Verstelleinrichtungen mit Batteriebetrieb die Batterien häufig ausgetauscht werden, was mühsam und teuer ist. Zudem sind Schrittmotoren in der Anschaffung an sich sehr teuer.

Daher ist es im Stand der Technik bekannt, um ein motorisch angetriebenes Ventil zu realisieren, anstelle von Schrittmotoren auf Gleichstrommotoren zurückzugreifen. Gleichstrommotoren haben gegenüber Schrittmotoren den Vorteil, dass nur so viel Energie wie nötig aufgewendet wird, um den Motor anzutreiben. Die Lebensdauer der verwendeten Batterien ist verlängert, so dass ein Austausch erst nach sehr langen Intervallen notwendig ist. Zudem sind Gleichstrommotoren kostengünstig.

Ein Nachteil im Einsatz eines Gleichstrommotors liegt allerdings darin, dass ein Encoder notwendig ist, um zu überprüfen, wie weit der Gleichstrommotor gefahren ist, um somit z.B. eine Position des Verstellorgans zu ermitteln. Beispielsweise kann die Position optisch oder magnetisch ermittelt werden. Ein solcher Encoder ist teuer, umständlich zu platzieren und bedeutet zusätzliche Bauteile an der Verstelleinrichtung.

Die Aufgabe der vorliegenden Erfindung besteht darin, eine Verstelleinrichtung, ein motorisch angetriebenes Ventil und ein Verfahren zum Betreiben einer Verstelleinrichtung anzugeben, welche die vorstehend genannten Nachteile nicht aufweisen.

Diese Aufgabe wird durch die im kennzeichnenden Teil von Anspruch 1 angegebenen Merkmale gelöst. Vorteilhafte Ausführungsvarianten sowie ein motorisch angetriebenes Ventil und ein Verfahren zum Betreiben einer Verstelleinrichtung sind in weiteren Ansprüchen angegeben.

Erfindungsgemäss umfasst eine Verstelleinrichtung einen Gleichstrommotor und ein durch eine Ausgangswelle des Gleichstrommotors angetriebenes Verstellorgan. Ferner umfasst die Verstelleinrichtung einen mit dem Gleichstrommotor gekoppelten Leistungstreiber zur Steuerung eines Motorstroms des Gleichstrommotors, eine Strommessschaltung, welche ausgebildet ist, eine Stromaufnahme des Gleichstrommotors zu erfassen und ein von der Anzahl von Umdrehungen des Gleichstrommotors abhängiges Strommesssignal auszugeben, und eine Recheneinheit, welcher das Strommesssignal eingegeben wird, ausgebildet zum Bestimmen der Anzahl von Umdrehungen des Gleichstrommotors basierend auf dem Strommesssignal. Die Verstelleinrichtung zeichnet sich dadurch aus, dass sie eine Stromänderung beim Umpolen des Kommutators des Gleichstrommotors erkennt. Da der Kommutator fest mit der Antriebswelle verbunden ist, lässt sich dadurch zuverlässig auf die getätigten Umdrehungen und dadurch auf die Position des angetriebenen Verstellorgans schliessen.

Mit anderen Worten, greift die Verstelleinrichtung den durch den Gleichstrommotor aufgenommenen Strom ab und ermittelt, basierend auf dem Strommesssignal, die «Schritte» des Gleichstrommotors. Dadurch kann auf die Position des Gleichstrommotors und somit des Verstellorgans geschlossen werden. Dies kann voraussetzen, dass die Ausgangsposition, z.B. ein Anschlag, des Verstellorgans bekannt ist. Eine solche Ausgangsposition kann z.B. eine Schliessstellung des Ventils sein, in welcher sich das Verstellorgan an einem Anschlag befindet.

In einer vorzugsweisen Ausführung der Verstelleinrichtung ist die Recheneinheit ausgebildet, die Anzahl von Umdrehungen des Gleichstrommotors basierend auf einer Welligkeit des Strommesssignals, insbesondere basierend auf Impulsen des Strommesssignals, zu bestimmen. Diese Ausführung erlaubt es ohne zusätzliche Bauteile, sondern lediglich anhand der erfassten Welligkeit des Strommesssignals, Rückschlüsse auf die Umdrehung des Gleichstrommotors zu ziehen. Hieraus lässt sich die Position des Verstellorgans einfach bestimmen. Die Welligkeit kann jegliche frequente Anteile im Strommesssignal einschliessen, z.B. sinusförmige Verläufe, Impulse, etc.

In einer vorzugsweisen Ausführung umfasst die Verstelleinrichtung ferner ein elektrisches Filter, welches der Strommessschaltung nachgeschaltet ist, ausgebildet zum Blockieren von niederfrequenten Anteilen des Strommesssignals und Durchlassen von hochfrequenten Anteilen des Strommesssignals. Beispielsweise erlaubt eine Hochpass-Filterung des Strommesssignals eine Erfassung bzw. Verarbeitung schneller Änderungen bzw. hochfrequenter Signalanteile. Die Information hieraus kann dazu verwendet werden, um Rückschlüsse aus der erfolgten Umdrehung des Gleichstrommotors zu ziehen.

In einer vorzugsweisen Ausführung umfasst die Verstelleinrichtung ferner einen mit dem elektrischen Filter gekoppelten Verstärker, ausgebildet zum Verstärken des Ausgangssignals des elektrischen Filters. In einer vorzugsweisen Ausführung der Verstelleinrichtung ist die Recheneinheit dem Verstärker nachgeschaltet, ausgebildet zum Einlesen des gefilterten und/oder verstärkten Strommesssignals. Der Verstärker kann die schnellen Änderungen im Strommesssignal so weit verstärken, dass diese direkt oder indirekt der Recheneinheit eingegeben werden können. Somit kann die Verstellung des Verstellorgans auch z.B. während der Fahrt laufend nachgespürt werden und können Rückschlüsse auf die jeweilige Position des Verstellorgans gezogen werden.

In einer vorzugsweisen Ausführung der Verstelleinrichtung ist die Recheneinheit mit dem Leistungstreiber zur Steuerung des Motorstroms des Gleichstrommotors gekoppelt. Ferner vorzugsweise ist die Recheneinheit ausgebildet, den Leistungstreiber basierend auf der erfassten Anzahl von Umdrehungen des Gleichstrommotors anzusteuern. Somit lässt sich ein Regelkreis implementieren.

In einer vorzugsweisen Ausführung der Verstelleinrichtung ist die Recheneinheit ausgebildet, den Gleichstrommotor derart anzusteuern, um das motorisch angetriebene Verstellorgan an wenigstens eine vorbestimmte Position zu verfahren. Ferner vorzugsweise ist die Recheneinheit ausgebildet, den Leistungstreiber derart anzusteuern, um das motorisch angetriebene Verstellorgan an wenigstens eine vorbestimmte Position zu verfahren. Der Gleichstrommotor kann direkt durch die Recheneinheit oder über den zwischengeschalteten Leistungstreiber angesteuert werden.

In einer vorzugsweisen Ausführung der Verstelleinrichtung ist die Recheneinheit ferner ausgebildet, den Gleichstrommotor derart anzusteuern, um eine Veränderung der Position des Verstellorgans nachzuspüren. Ferner vorzugsweise weist die vorbestimmte Position wenigstens eine Schliessstellung und/oder eine Offenstellung des motorisch angetriebenen Verstellorgans auf.

Die Erfindung betrifft ferner ein motorisch angetriebenes Ventil, welches eine Verstelleinrichtung nach einem der Ansprüche 1 bis 11 umfasst. Das motorisch angetriebene Ventil wird durch einen kostengünstigen und energiesparsamen Gleichstrommotor angetrieben. Die Verstelleinrichtung kann vorteilhaft im Batteriebetrieb betrieben werden. Zugleich kann vorteilhafterweise der Einsatz von zusätzlichen Positionsgebern, z.B. ein Encoder, vermieden werden.

Die Erfindung betrifft ferner ein Verfahren zum Betreiben einer Verstelleinrichtung nach einem der Ansprüche 1 bis 11, umfassend die Schritte: Erfassen einer Stromaufnahme des Gleichstrommotors, Erzeugen, basierend auf der erfassten Stromaufnahme, eines von der Anzahl von Umdrehungen des Gleichstrommotors abhängigen Strommesssignals, und Bestimmen der Anzahl von Umdrehungen des Gleichstrommotors basierend auf dem Strommesssignal.

In einer vorzugsweisen Ausführung umfasst das Verfahren ferner den Schritt: Bestimmen der Position des Verstellorgans basierend auf der bestimmten Anzahl von Umdrehungen des Gleichstrommotors. Ferner vorzugsweise wird die Anzahl von Umdrehungen des Gleichstrommotors basierend auf einer Welligkeit des Strommesssignals, insbesondere basierend auf Impulsen des Sensorsignals, bestimmt.

Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigen:
- Fig. 1: ein Blockschaltbild einer Verstelleinrichtung gemäss einer beispielhaften Ausführung, und
- Fig. 2: ein Diagramm eines Spannungsverlaufs.

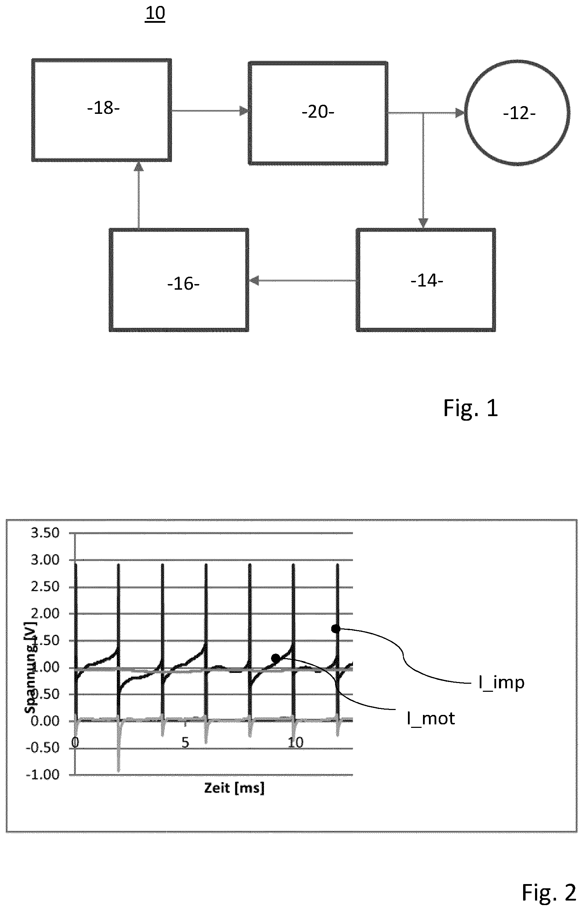

In Fig. 1 ist ein Blockschaltbild einer Verstelleinrichtung 10 gemäss einer beispielhaften Ausführung dargestellt. Die Verstelleinrichtung 10 umfasst einen Motor, welcher gemäss der Erfindung als Gleichstrommotor 12 ausgeführt ist. Der Gleichstrommotor 12 weist eine Ausgangswelle auf, über welche ein Verstellorgan der Verstelleinrichtung angetrieben wird. Das Verstellorgan kann als ein Ventilkörper eines Ventils ausgeführt sein. Eine Strommessschaltung 14 greift eine Stromaufnahme des Gleichstrommotors 10 ab und gibt ein von der Anzahl von Umdrehungen des Gleichstrommotors 10 abhängiges Strommesssignal an einen Verstärker 16 aus. Das Strommesssignal weist eine Welligkeit auf, welche durch Stromänderungen beim Umpolen eines Kommutators des Gleichstrommotors 10 hervorgerufen ist.

Obwohl nicht gezeigt, kann das Strommesssignal durch wenigstens ein Hochpassfilter durchlaufen, welches niederfrequente Anteile des Strommesssignals blockiert und hochfrequente Anteile des Strommesssignals durchlässt. Das Hochpass-gefilterte Strommesssignal kann an den Verstärker 16 ausgegeben werden. Alternativ oder zusätzlich kann dem Verstärker 16 ein Hochpassfilter nachgeschaltet sein. Optional kann der Verstärker 16 auch ausgelassen sein und kann der Strommessschaltung 14 lediglich ein Hochpassfilter nachgeschaltet sein.

Das wenigstens durch ein Hochpassfilter durchlaufene Strommesssignal wird einer Recheneinheit 18 eingegeben. Diese Recheneinheit 18 ist mit einem Leistungstreiber 20 gekoppelt, welcher zur Steuerung eines dem Gleichstrommotor 12 zugeführten Motorstroms ausgebildet ist. Hierbei kann die Recheneinheit 18 ausgebildet sein, den Leistungstreiber 20 basierend auf der erfassten Anzahl von Umdrehungen des Gleichstrommotors 12 anzusteuern. Somit kann ein Regelkreis implementiert werden.

Die Recheneinheit 18 kann den Gleichstrommotor 12 derart ansteuern, um das angetriebene Verstellorgan an wenigstens eine vorbestimmte Position zu verfahren. Optional kann die Recheneinheit 18 den Leistungstreiber 20 derart ansteuern, um das angetriebene Verstellorgan an wenigstens eine vorbestimmte Position zu verfahren. Die Recheneinheit 18 kann ferner den Gleichstrommotor 12 derart ansteuern, um eine Veränderung der Position des Verstellorgans nachzuspüren, wobei die vorbestimmte Position eine Schliessstellung und/oder eine Offenstellung des motorisch angetriebenen Verstellorgans sein kann.

Die Verstelleinrichtung 10 ermittelt die «Schritte» des Gleichstrommotors 12. Dadurch kann auf die Position des Gleichstrommotors 12 und optional z.B. einer Kartusche geschlossen werden. Hierzu sollte eine Ausgangsposition, z.B. ein Anschlag bzw. eine Schliessstellung und/oder eine Offenstellung des motorisch angetriebenen Verstellorgans, bekannt sein. Die Verstelleinrichtung 10 erkennt die Stromänderung beim Umpolen des Kommutators des Gleichstrommotors 12. Da der Kommutator fest mit der Antriebswelle des Gleichstrommotors 12 gekoppelt ist, lässt sich auf bislang unbekannte Art und Weise zuverlässig auf die getätigten Umdrehungen und dadurch auf die Position des angetriebenen Verstellorgans schliessen.

Die Verstelleinrichtung 10 misst zuerst den Strom, welcher durch den Gleichstrommotor 12 aufgenommen wird. Dieser Strom kann dann Hochpass-gefiltert werden, damit nur schnelle Änderungen verarbeitet werden. Diese Änderungen können so weit verstärkt werden, dass diese direkt z.B. von der Recheneinheit 18 eingelesen werden können. So kann während der Fahrt der gefahrene Weg laufend nachgespürt werden und kann hierdurch auf die absolute Position geschlossen werden. Die Erfindung ermöglicht, dass die Vorteile des Gleichstrommotors 12 im Batteriebetrieb beibehalten werden und gleichzeitig ein Encoder eingespart werden kann.

Fig. 2 veranschaulicht einen beispielhaften Verlauf von einer direkt am Gleichstrommotor der in Fig. 1 gezeigten Verstelleinrichung abgegriffenen Spannung I_mot und einen beispielhaften Spannungsverlauf I_imp, welcher aus einer Verarbeitung auf die direkt abgegriffene Spannung I_mot resultiert. Eine Vorspannung der direkt am Gleichstrommotor abgegriffenen Spannung I_mot liegt auf einem Potential von +1 V. Der Verlauf bzw. die Welligkeit der direkt am Gleichstrommotor abgegriffenen Spannung I_mot resultiert aus Stromänderungen beim Umpolen des Kommutators des Gleichstrommotors. Es sind hier bereits impulsartige Änderungen in einem jeweils zeitlichen Abstand von 2 ms zu erkennen. Die jeweiligen Amplituden, ausgehend von der Nulllinie, übersteigen nicht die Spanne von +/- 0.5 V.

Diese direkt abgegriffene Spannung I_mot unterläuft der vorgängig beschriebenen Verarbeitung aus wenigstens einer Hochpass-Filterung und einer Verstärkung. Hieraus resultieren deutlich erkennbare Impulse (I_imp) in einem Spannungsbereich zwischen 0 V und +3 V und dem ebenfalls deutlich erkennbaren zeitlichen Abstand von 2 ms zwischen benachbarten Impulsen. Aus der hieraus ableitbaren Frequenz von 500 Hz lassen sich Rückschlüsse aus der Drehzahl des Gleichstrommotors und somit der Anzahl von Umdrehungen des Gleichstrommotor ziehen. Ausgehend von einer Referenzstellung des Verstellorgans, z.B. ein Anschlag des Verstellorgans in der Schliessstellung, kann fortlaufend nachgespürt werden, an welcher Position sich das Verstellorgan befindet. Hierzu sind vorteilhafterweise keine weiteren Bauteile, z.B. Encoder, etc, notwendig. Weiter vorteilhaft kann auf einen Gleichstrommotor zurückgegriffen werden, welcher mit Batteriespannung betrieben werden kann.

## Patentansprüche

1. Verstelleinrichtung (10), umfassend einen Gleichstrommotor (12) und ein durch eine Ausgangswelle des Gleichstrommotors (12) angetriebenes Verstellorgan, ferner umfassend:
- einen mit dem Gleichstrommotor (10) gekoppelten Leistungstreiber (20) zur Steuerung eines Motorstroms des Gleichstrommotors (10),
- eine Strommessschaltung (14), welche ausgebildet ist, eine Stromaufnahme des Gleichstrommotors (12) zu erfassen und ein von der Anzahl von Umdrehungen des Gleichstrommotors (12) abhängiges Strommesssignal auszugeben, und
- eine Recheneinheit (18), welcher das Strommesssignal eingegeben wird, ausgebildet zum Bestimmen der Anzahl von Umdrehungen des Gleichstrommotors (12) basierend auf dem Strommesssignal.

2. Verstelleinrichtung (10) nach Anspruch 1, wobei die Recheneinheit (18) ausgebildet ist, die Anzahl von Umdrehungen des Gleichstrommotors (12) basierend auf einer Welligkeit des Strommesssignals, insbesondere basierend auf Impulsen des Strommesssignals, zu bestimmen.

3. Verstelleinrichtung (10) nach Anspruch 1 oder 2, ferner umfassend ein elektrisches Filter, welches der Strommessschaltung (14) nachgeschaltet ist, ausgebildet zum Blockieren von niederfrequenten Anteilen des Strommesssignals und Durchlassen von hochfrequenten Anteilen des Strommesssignals.

4. Verstelleinrichtung (10) nach Anspruch 3, ferner umfassend einen mit dem elektrischen Filter gekoppelten Verstärker (16), ausgebildet zum Verstärken des Ausgangssignals des elektrischen Filters.

5. Verstelleinrichtung (10) nach Anspruch 4, wobei die Recheneinheit (18) dem Verstärker (16) nachgeschaltet ist, ausgebildet zum Einlesen des gefilterten und/oder verstärkten Strommesssignals.

6. Verstelleinrichtung (10) nach Anspruch 5, wobei die Recheneinheit (18) mit dem Leistungstreiber (20) zur Steuerung des Motorstroms des Gleichstrommotors (12) gekoppelt ist.

7. Verstelleinrichtung (10) nach Anspruch 6, wobei die Recheneinheit (18) ausgebildet ist, den Leistungstreiber (20) basierend auf der erfassten Anzahl von Umdrehungen des Gleichstrommotors (12) anzusteuern.

8. Verstelleinrichtung (10) nach Anspruch 7, wobei die Recheneinheit (18) ausgebildet ist, den Gleichstrommotor (12) derart anzusteuern, um das motorisch angetriebene Verstellorgan an wenigstens eine vorbestimmte Position zu verfahren.

9. Verstelleinrichtung (10) nach Anspruch 7 oder 8, wobei die Recheneinheit (18) ausgebildet ist, den Leistungstreiber (20) derart anzusteuern, um das motorisch angetriebene Verstellorgan an wenigstens eine vorbestimmte Position zu verfahren.

10. Verstelleinrichtung (10) nach Anspruch 8 oder 9, wobei die Recheneinheit (18) ferner ausgebildet ist, den Gleichstrommotor (12) derart anzusteuern, um eine Veränderung der Position des Verstellorgans nachzuspüren.

11. Verstelleinrichtung (10) nach einem der Ansprüche 8-10, wobei die vorbestimmte Position wenigstens eine Schliessstellung und/oder eine Offenstellung des motorisch angetriebenen Verstellorgans aufweist.

12. Motorisch angetriebenes Ventil, umfassend eine Verstelleinrichtung (10) nach einem der vorangehenden Ansprüche.

13. Verfahren zum Betreiben einer Verstelleinrichtung (10) nach einem der Ansprüche 1-11, umfassend die Schritte:
- Erfassen einer Stromaufnahme des Gleichstrommotors (12) ,
- Erzeugen, basierend auf der erfassten Stromaufnahme, eines von der Anzahl von Umdrehungen des Gleichstrommotors (12) abhängigen Strommesssignals, und
- Bestimmen der Anzahl von Umdrehungen des Gleichstrommotors (12) basierend auf dem Strommesssignal.

14. Verfahren nach Anspruch 13, ferner umfassend den Schritt:
- Bestimmen der Position des Verstellorgans basierend auf der bestimmten Anzahl von Umdrehungen des Gleichstrommotors (12).

15. Verfahren nach Anspruch 13 oder 14, wobei die Anzahl von Umdrehungen des Gleichstrommotors (12) basierend auf einer Welligkeit des Strommesssignals, insbesondere basierend auf Impulsen des Sensorsignals, bestimmt wird.
